(19) Europäisches Patentamt
European Patent Office
Office européen des brevets

(11) EP 2 650 329 B1

(12) # EUROPEAN PATENT SPECIFICATION

(45) Date of publication and mention of the grant of the patent:
**05.04.2017 Bulletin 2017/14**

(51) Int Cl.:
***C08L 23/10*** *(2006.01)*

(21) Application number: **12163836.5**

(22) Date of filing: **12.04.2012**

(54) **Automotive material with high quality perception**

Automobilmaterial mit hochqualitativer Erscheinung

Matériau automobile doté d’une perception de haute qualité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2013 Bulletin 2013/42**

(73) Proprietor: **Borealis AG**
**1220 Vienna (AT)**

(72) Inventors:
- **Gahleitner, Markus**
**4501 Neunhofen/Krems (AT)**
- **Tranninger, Michael**
**4055 Pucking (AT)**

(74) Representative: **Maiwald Patentanwalts GmbH**
**Elisenhof**
**Elisenstrasse 3**
**80335 München (DE)**

(56) References cited:
**EP-A1- 2 036 947** **US-A1- 2004 014 891**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 650 329 B1

## Description

The present invention is directed to a polypropylene-based composition suitable for the automobile industry.

Polypropylene (PP) is nowadays the polymer of choice for automobile parts like bumpers, door panels, and dash boards. In particular heterophasic propylene copolymers (HECOs) are suitable as they combine stiffness with good impact behavior. Heterophasic propylene copolymers (HECOs) are well known in the art. Such heterophasic propylene copolymers (HECOs) comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term inclusion indicates that the matrix and the inclusion form different phases within the heterophasic propylene copolymer (HECO), said inclusions are for instance visible by high resolution microscopy, like electron microscopy or scanning force microscopy.

Automotive parts like dashboards, door claddings, or trims are commonly made from propylene based resins. In particular thermoplastic polyolefin compounds often including a filler such as talc are widely used for these applications. For automotive interior parts it is often tried to mimic a leather- or fabric-like surface and touch in order to give occupants a high-quality impression of the car. As a result materials should provide a low surface gloss level. Additionally, to maintain the high-quality perception of the parts till the end of the car's lifetime the polymer should provide a high resistance to scratches, e.g. from keys, fingernails, or rings.

Due to the, compared to metals, low stiffness and surface hardness of polymers they are much more prone to scratches. Therefore, apart from material design and filler addition usually additives are used to overcome this drawback.

It is known in the art that the scratch resistance of thermoplastic polyolefin compounds such as thermoplastic polyolefin compounds including e.g. talc as a filler can be improved by the addition of slip agents. Slip agents such as fatty acid amides reduce the coefficient of friction of polymeric surfaces by migrating from the bulk to the surface. Furthermore, it is known that the addition of polyethylene may affect the morphology of the dispersed rubber phase stabilizing the surface and immediate subsurface layer of injection moldings. For example, for further improving scratch resistance of polypropylene-based compositions filled with talc, it is state of the art to add HDPE, which on the one hand significantly improves scratch resistance but on the other hand increases gloss significantly, which is not desired.

The question of "low-gloss polymer surfaces" is a general one, and prior art exists for several different polymers:

> US 4526926 describes "Low gloss carbonate polymer blends" being blends of carbonate polymer, such as a polycarbonate of bisphenol-A (PC), and a rubber-modified copolymer, such as an acrylonitrile/butadiene/styrene (ABS) resin. The composition further includes polyurethane rubber particles. The blends are said to have an increased the surface roughness and reduced gloss which is normally very high for PC.

US 5354796 describes "Low gloss thermoplastic molding compositions"; these are thermoplastic compositions comprising an acrylonitrile-butadiene-styrene graft copolymer, polycarbonate and an epoxy functional silicone. The compositions are said to exhibit reduced gloss and enhanced low temperature impact strengths and are said to be useful as molding resins.

For polypropylene, several possible approaches for achieving high quality low-gloss surfaces on injection molded articles have been described:

> EP 0618259 covers "Thermoplastic elastomer, composition therefor and production process thereof, as well as molded or otherwise formed product obtained from the thermoplastic elastomer" in which (partially) crosslinked diene components are applied.

US 6048942 covers "Thermoplastic olefin articles having high surface gloss and mar resistance". The thermoplastic olefin composition are said to be useful for making molded articles with high surface gloss and mar resistance and include (1) about 10 to about 90 parts of a propylene homopolymer, copolymer, or terpolymer, (2) about 90 to about 10 parts of either an olefin polymer composition that contains a low molecular weight ethylene copolymer rubber; an elastomeric copolymer of ethylene and a $C_3$-$C_8$ $\alpha$-olefin made with a metallocene catalyst, or a mixture of the two, and (3) about 0.1 to about 10 parts of a lubricant per hundred parts of (1) plus (2).

EP 1040162 covers "Thermoplastic polymer compositions" based on PP. These compositions are said to be suitable for thermoforming which demonstrates good grain retention at thin gauges, low gloss and whose cost is competitive for many applications, particularly in the automotive industry. The compositions contain (a) 10-35 wt.% of polypropylene or an ethylene/propylene copolymer, (b) 0-30 wt.% uncrosslinked ethylene propylene copolymer rubber having an ethylene content 60-80 wt.%, (c) 10-25 wt.% of an ionomeric copolymer of ethylene and an $\alpha,\beta$-unsaturated $C_3$-$C_8$ carboxylic acid, (d) 2-6 wt.% of a copolymer of ethylene and glycidyl acrylate or glycidyl methacrylate, (e) 5-20 wt.% polyethylene, and (f) 0-25 wt.% of an ethylene alpha-olefin copolymer elastomer.

US 2005/0267261 covers "Low gloss thermoplastic polyolefin composition" with two different types of elastomers

differing in the Mooney viscosity.

EP 2197947 relates to a "Polypropylene Resin Composition". It describes the combination of a high-impact PP copolymer with a plastomer, a mineral filler and a surface modifier (such as fatty acid amides or monoglycerides) to achieve the targeted property combination within which low gloss and high scratch resistance are desired. For improving scratch resistance, a modified PP such as a fatty acid anhydride-modified PP is used. The compositions do not comprise HDPE.

An alternative approach is the application of a low-gloss cover layer (paint, varnish) to the polymer part as, for example, described in US 5750234 relating to "Interior automotive laminate with thermoplastic low gloss coating"), but such an approach will necessarily increase the system cost.

There remains a need in the art for a cost-effective approach for reducing the gloss of polypropylene-based compositions, while maintaining an acceptable scratch resistance.

The present inventors surprisingly found that the gloss of polypropylene-based compositions, the scratch resistance of which has been improved using HDPE, can be reduced while the scratch resistance can be maintained in an acceptable range by adding a certain amount of particulate inorganic material commonly known as antiblocking agents. The polypropylene-based composition of the present invention is especially suitable in the field of automotive industry.

Thus, the present invention relates to a composition having a melt flow rate $MFR_2$ (230°C) measured according to ISO 1133 in the range of 5 to 40 g/10min, said composition comprising

(a) one or more heterophasic propylene copolymers (HECO), wherein the one or more heterophasic propylene copolymers (HECO) are contained in a total amount of at least 40.0 wt.-%, preferably in an total amount of 40.0 to 80.0 wt.-%;
(b) a high density polyethylene (HDPE) in an amount of at least 5.0 wt.-%, preferably in an amount of 5.0 to 15.0 wt.-%;
(c) an inorganic anti-blocking agent (AB) in an amount of 0.5 to 5.0 wt.-%;
(d) optionally a reinforcing mineral filler (F) in amount of more than 5 to 30 wt.-%; and
(e) optionally plastomer(s) (P) in an amount of at least 1.0 wt.-%, preferably in an amount of 3.0 to 6.0 wt.-%;

the weight percentages are based on the total weight of the composition wherein further the inorganic antiblocking agent (AB) and the reinforcing mineral filler (F) are chemically different and the inorganic antiblocking agent (AB) is selected from natural and synthetic silica, alumina-silicate ceramic spheres, crosslinked polymeric spheres and zeolites.

Heterophasic propylene copolymers (HECOs) are known in the art and are widely used in the automotive industry. The expression "heterophasic" indicates that an elastomeric copolymer, preferably an elastomeric propylene copolymer, is (finely) dispersed in a matrix. In other words the elastomeric copolymer forms inclusions in the matrix. Thus the matrix contains (finely) dispersed inclusions being not part of the matrix and said inclusions contain the elastomeric copolymer. The term "inclusion" according to this invention shall preferably indicate that the matrix and the inclusion form different phases within the heterophasic propylene copolymer, said inclusions are for instance visible by high resolution microscopy, like electron microscopy or scanning force microscopy.

In one embodiment the one or more heterophasic polypropylene copolymers (HECO) is the heterophasic propylene copolymer (HECO-1) as defined below. In another embodiment, the heterophasic propylene copolymer is composed of two different HECOs, for example the heterophasic propylene copolymer (HECO-1) and the heterophasic propylene copolymer (HECO-2) as defined in detail below.

The heterophasic propylene copolymer (HECO-1) according to this invention has preferably a melt flow rate $MFR_2$ (230 °C) measured according to ISO 1133 in the range of 3.0 to 120.0 g/10min, more preferably in the range of 10.0 to 100.0 g/10min, still more preferably 15.0 to 75.0 g/10min.

The heterophasic propylene copolymer (HECO-1) according to this invention preferably comprises

(a) a polypropylene matrix (M-PP1) and
(b) an elastomeric propylene copolymer (E-PP1) comprising units derived from

- propylene and
- ethylene and/or $C_4$ to $C_{12}$ $\alpha$-olefin.

Preferably the propylene content in the heterophasic propylene copolymer (HECO-1) is 70.0 to 92.0 wt.-%, more preferably 75.0 to 90.0 wt.-%, based on the total heterophasic propylene copolymer (HECO-1), more preferably based on the amount of the polymer components of the heterophasic propylene copolymer (HECO-1), yet more preferably based on the amount of the polypropylene matrix (M-PP1) and the elastomeric propylene copolymer (E-PP1) together. The remaining part constitutes the comonomers, preferably ethylene.

As defined herein a heterophasic propylene copolymer (HECO-1) comprises as polymer components only the

polypropylene matrix (M-PP1) and the elastomeric copolymer (E-PP1). In other words the heterophasic propylene copolymer (HECO-1) may contain further additives but no other polymer in an amount exceeding 5 wt-%, more preferably exceeding 3 wt.-%, like exceeding 1 wt.-%, based on the total heterophasic propylene copolymer (HECO-1), more preferably based on the polymers present in the heterophasic propylene copolymer (HECO-1). One additional polymer which may be present in such low amounts is a polyethylene which is a reaction product obtained by the preparation of the heterophasic propylene copolymer (HECO-1). Accordingly it is in particular appreciated that a heterophasic propylene copolymer (HECO-1) as defined in the instant invention contains only a polypropylene matrix (M-PP1), an elastomeric propylene copolymer (E-PP1) and optionally a polyethylene in amounts as mentioned in this paragraph. Further, throughout the present description the xylene cold insoluble (XCI) fraction represents the polypropylene matrix (M-PP1) and optionally the polyethylene of the heterophasic propylene copolymer (HECO-1) whereas the xylene cold soluble (XCS) fraction represents the elastomeric part of the heterophasic propylene copolymer (HECO-1), i.e. the elastomeric propylene copolymer (E-PP1).

Accordingly the polypropylene matrix (M-PP1) content, i.e. the xylene cold insoluble (XCI) content, in the heterophasic propylene copolymer (HECO-1) is preferably in the range of 50.0 to 80.0 wt.-%, more preferably in the range of 55.0 to 78.0 wt.-%. In case polyethylene is present in the heterophasic propylene copolymer (HECO-1), the values for the polypropylene matrix (M-PP1) content but not for the xylene cold insoluble (XCI) content may be a bit decreased.

On the other hand the elastomeric propylene copolymer (E-PP1) content, i.e. the xylene cold soluble (XCS) content, in the heterophasic propylene copolymer (HECO-1) is preferably in the range of 20.0 to 50.0 wt.-%, more preferably in the range of 22.0 to 45.0 wt.-%.

The polypropylene matrix (M-PP1) is preferably a random propylene copolymer (R-PP1) or a propylene homopolymer (H-PP1), the latter being especially preferred.

Accordingly the comonomer content of the polypropylene matrix (M-PP1) is equal or below 1.0 wt.-%, yet more preferably not more than 0.8 wt.-%, still more preferably not more than 0.5 wt.-%, like not more than 0.2 wt.-%.

As mentioned above the polypropylene matrix (M-PP1) is preferably a propylene homopolymer (H-PP1).

The expression propylene homopolymer used in the instant invention relates to a polypropylene that consists substantially, i.e. of more than 99.7 wt.-%, still more preferably of at least 99.8 wt.-%, of propylene units. In a preferred embodiment only propylene units in the propylene homopolymer are detectable.

In case the polypropylene matrix (M-PP1) is a random propylene copolymer (R-PP1) it is appreciated that the random propylene copolymer (R-PP1) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP1) according to this invention comprises, especially consists of, monomers copolymerizable with propylene from the group consisting of ethylene, 1-butene and 1-hexene. More specifically the random propylene copolymer (R-PP1) of this invention comprises - apart from propylene - units derivable from ethylene and/or 1-butene. In a preferred embodiment the random propylene copolymer (R-PP1) comprises units derivable from ethylene and propylene only.

Additionally it is appreciated that the random propylene copolymer (R-PP1) has preferably a comonomer content in the range of more than 0.3 to 1.0 wt.-%, more preferably in the range of more than 0.3 to 0.8 wt.-%, yet more preferably in the range of 0.3 to 0.7 wt.-%.

The term "random" indicates that the comonomers of the random propylene copolymers (R-PP1) and (R-PP2) are randomly distributed within the propylene copolymers. The term random is understood according to IUPAC (Glossary of basic terms in polymer science; IUPAC recommendations 1996).

The polypropylene matrix (M-PP1) of the heterophasic propylene copolymer (HECO-1), preferably the polypropylene matrix (M-PP1) being the propylene homopolymer (H-PP1), can be multimodal or bimodal in view of the molecular weight.

The expression "multimodal" or "bimodal" used throughout the present invention refers to the modality of the polymer, i.e.

- the form of its molecular weight distribution curve, which is the graph of the molecular weight fraction as a function of its molecular weight,

  and / or
- the form of its comonomer content distribution curve, which is the graph of the comonomer content as a function of the molecular weight of the polymer fractions.

As will be explained below, the heterophasic propylene copolymers as well their individual components (matrix and elastomeric copolymer) can be produced by blending different polymer types, i.e. of different molecular weight and/or comonomer content. However, it is preferred that the heterophasic propylene copolymers as well their individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

Further it is appreciated that the polypropylene matrix (M-PP1) of the heterophasic propylene copolymer (HECO-1) has a moderate melt flow $MFR_2$ (230 °C). As stated above the xylene cold insoluble (XCI) fraction of a heterophasic propylene copolymer is essentially identical with the matrix of said heterophasic propylene copolymer. Accordingly the melt flow rate $MFR_2$ (230 °C) of the polypropylene matrix (M-PP1) equates with the melt flow rate $MFR_2$ (230 °C) of the xylene cold insoluble (XCI) fraction of the heterophasic propylene copolymer (HECO-1). Accordingly, it is preferred that the xylene cold insoluble (XCI) fraction of the heterophasic propylene copolymer (HECO-1) has a melt flow rate $MFR_2$ (230 °C) measured according to ISO 1133 of 10.0 to 200.0 g/10min, more preferably of 15.0 to 160.0 g/10min, still more preferably of 30.0 to 140.0 g/10 min.

Preferably the polypropylene matrix (M-PP1) is isotactic. Accordingly it is appreciated that the polypropylene matrix (M-PP1) has a rather high isotactic pentad concentration, i.e. higher than 80 %, more preferably higher than 85 %, yet more preferably higher than 90 %, still more preferably higher than 92 %, still yet more preferably higher than 93 %, like higher than 95 %.

The second component of the heterophasic propylene copolymer (HECO-1) is the elastomeric propylene copolymer (E-PP1).

The elastomeric propylene copolymer (E-PP1) comprises, preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric propylene copolymer (E-PP1) may additionally contain units derived from a conjugated diene, like butadiene, or a non-conjugated diene, however, it is preferred that the elastomeric propylene copolymer (E-PP1) consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric propylene copolymer (E-PP1) comprises at least units derivable from propylene and ethylene and may comprise other units derivable from a further $\alpha$-olefin as defined in the previous paragraph. However, it is in particular preferred that elastomeric propylene copolymer (E-PP1) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM1) and/or an ethylene propylene rubber (EPR1) as elastomeric propylene copolymer (E-PP1) is/are especially preferred, the latter most preferred.

Like the polypropylene matrix (M-PP1) the elastomeric propylene copolymer (E-PP1) can be unimodal or multimodal, like bimodal, the latter being preferred. Concerning the definition of unimodal and multimodal, like bimodal, it is referred to the definition above.

Like the polypropylene matrix (M-PP1) the elastomeric propylene copolymer (E-PP1) can be unimodal or multimodal, like bimodal, the latter being preferred. Concerning the definition of unimodal and multimodal, like bimodal, it is referred to the definition above.

In the present invention the content of units derivable from propylene in the elastomeric propylene copolymer (E-PP1) equates with the content of propylene detectable in the xylene cold soluble (XCS) fraction. Accordingly the propylene detectable in the xylene cold soluble (XCS) fraction ranges from 40.0 to 75.0 wt.-%, more preferably 45.0 to 70.0 wt.-%. Thus in a specific embodiment the elastomeric propylene copolymer (E-PP1), i.e. the xylene cold soluble (XCS) fraction, comprises from 25.0 to 60.0 wt.-%, more preferably 30.0 to 55.0 wt.-%, units derivable from comonomers other than propylene, like ethylene. Preferably the elastomeric propylene copolymer (E-PP1) is an ethylene propylene non-conjugated diene monomer polymer (EPDM1) or an ethylene propylene rubber (EPR1), the latter especially preferred, with a propylene and/or ethylene content as defined in this paragraph.

A further preferred requirement of the present invention is that the intrinsic viscosity (IV) of the xylene cold soluble (XCS) fraction of the heterophasic propylene copolymer (HECO-1) is rather high. Rather high values of intrinsic viscosity (IV) improve the impact strength. Accordingly it is appreciated that the intrinsic viscosity of the xylene cold soluble (XCS) fraction of the heterophasic propylene copolymer (HECO-1) is above 2.0 dl/g, more preferably at least 2.3 dl/g. On the other hand the intrinsic viscosity (IV) should be not too high otherwise the flowability is decreased. Thus

the intrinsic viscosity of the xylene cold soluble (XCS) fraction of the heterophasic propylene copolymer (HECO-1) is preferably in the range of 2.0 to 4.5 dl/g, more preferably in the range 2.3 to 4.1 dl/g. The intrinsic viscosity is measured according to ISO 1628 in decaline at 135 °C.

Preferably the heterophasic propylene copolymer (HECO-1) is $\alpha$-nucleated.

Accordingly preferred $\alpha$-nucleating agents are selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

The nucleating agent content of the heterophasic propylene copolymer (HECO-1) is preferably up to 2 wt.-%.

Such additives are generally commercially available and are described, for example, in Gachter/Müller, Plastics Additives Handbook, 3rd Edition, Hanser Publishers, Munich, 1990.

In a preferred embodiment, the heterophasic propylene copolymer (HECO-1) of the present invention contain from 0.1 to 1.0 wt.-%, preferably from 0.15 to 0. 25 wt.-%, of a nucleating agent, in particular salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate]. In another preferred embodiment the heterophasic polypropylene (H-PP1) is $\alpha$-nucleated by polymerized vinyl compounds as mentioned below.

As mentioned above a further heterophasic propylene copolymer (HECO-2) can be present in the inventive polypropylene-based compositions. The second heterophasic propylene copolymer (HECO-2) exhibits a relatively high melt flow to ensure that the final composition according to the invention is featured by a sufficiently high melt flow. The second heterophasic propylene copolymer (HECO-2) according to this inventions preferably has a melt flow rate $MFR_2$ (230 °C) of at least 40 g/10min, preferably a melt flow rate $MFR_2$ (230 °C) in the range of 40.0 to 1,000.0 g/10min, more preferably in the range of 60.0 to 500.0 g/10min, still more preferably in the range of 70 to 200 g/10min.

The heterophasic propylene copolymer (HECO-2) according to this invention preferably comprises

(a) a polypropylene matrix (M-PP2) and
(b) an elastomeric propylene copolymer (E-PP2) comprising units derived from

- propylene and
- ethylene and/or $C_4$ to $C_{12}$ $\alpha$-olefin.

Preferably the propylene content in the heterophasic propylene copolymer (HECO-2) is 85.0 to 96.0 wt.-%, more preferably 88.0 to 94.0 wt.-%, based on the total heterophasic propylene copolymer (H-PP2), more preferably based on amount of the polymer components of the heterophasic propylene copolymer (HECO-2), yet more preferably based on the amount of the polypropylene matrix (M-PP2) and the elastomeric propylene copolymer (E-PP2) together. The remaining part constitute the comonomers different from propylene (ethylene and/or $C_4$ to $C_{12}$ $\alpha$-olefin), preferably constitutes ethylene.

Concerning the definition of a heterophasic polypropylene, it is referred to the information provided when discussing the heterophasic propylene copolymer (HECO-1). Accordingly the heterophasic propylene copolymer (HECO-2) comprises as polymer components only the polypropylene matrix (M-PP2) and the elastomeric propylene copolymer (E-PP2). In other words, the heterophasic propylene copolymer (HECO-2) may contain further additives but no other polymer in an amount exceeding 5 wt-%, more preferably exceeding 3 wt.-%, like exceeding 1 wt.-%, based on the total heterophasic propylene copolymer (HECO-2), more preferably based on the polymers present in the heterophasic propylene copolymer (HECO-2). One additional polymer which may be present in such low amounts is a polyethylene which is a reaction product obtained by the preparation of the heterophasic propylene copolymer (HECO-2). Accordingly it is in particular appreciated that a heterophasic propylene copolymer (HECO-2) as defined in the instant invention contains only a polypropylene matrix (M-PP2), an elastomeric propylene copolymer (E-PP2) and optionally a polyethylene in amounts as mentioned in this paragraph. Further, throughout the present invention the xylene cold insoluble (XCI) fraction of the heterophasic propylene copolymer (HECO-2) represents the matrix (M-PP2) and optionally the polyethylene whereas the xylene cold soluble (XCS) fraction represents the elastomeric part of the heterophasic propylene copolymer (HECO-2), i.e. the elastomeric propylene copolymer (E-PP2).

Accordingly the polypropylene matrix (M-PP2) content, i.e. the xylene cold insoluble (XCI) content, in the heterophasic propylene copolymer (HECO-2) is preferably in the range of 80.0 to 93.0 wt.-%, more preferably in the

range of 82.0 to 91.0 wt.-%, like 83.0 to 89.0 wt.-%. In case polyethylene is present in the heterophasic propylene copolymer (HECO-2), the values for the polypropylene matrix (M-PP2) content but not for the xylene cold insoluble (XCI) content may be a bit decreased.

On the other hand the elastomeric propylene copolymer (E-PP2) content, i.e. the xylene cold soluble (XCS) content, in the heterophasic propylene copolymer (HECO-2) is preferably in the range of 8.0 to 30.0 wt.-%, preferably in the range of 15.0 to 27.0 wt.-%, more preferably in the range of 17.0 to 25.0 wt.-%.

Accordingly the elastomeric propylene copolymer (E-PP2) content, i.e. the xylene cold soluble (XCS) content, in the heterophasic propylene copolymer (HECO-2) is rather low compared to the elastomeric propylene copolymer (E-PP1) content, i.e. the xylene cold soluble (XCS) content, in the heterophasic propylene copolymer (HECO-1). Thus it is appreciated that the amount of xylene cold soluble (XCS) content of the heterophasic polypropylene (HECO-1) measured according to ISO 6427 is higher, preferably at least 8.0 wt.-% higher, more preferably at least 11.0 wt.-% higher, compared to the xylene cold soluble (XCS) content of the heterophasic polypropylene (HECO-2) measured according to ISO 16152. Accordingly it is appreciated that following formula (I), preferably (Ia), is fulfilled

$$XCS\ (HECO\text{-}1) \geq 1.2 \times XCS\ (HECO\text{-}2) \qquad (I)$$

$$XCS\ (HECO\text{-}1) \geq 1.3 \times XCS\ (HECO\text{-}2) \qquad (Ia)$$

wherein

XCS (HECO-1) is the xylene soluble content measured according to ISO 6427 given in weight percentage of the heterophasic propylene copolymer (HECO-1), and

XCS (HECO-2) is the xylene soluble content measured according to ISO 6427 given in weight percentage of the heterophasic propylene copolymer (HECO-2).

Further, the polypropylene matrix (M-PP2) is preferably a random propylene copolymer (R-PP2) or a propylene homopolymer (H-PP2), the latter especially preferred.

Accordingly the comonomer content of the polypropylene matrix (M-PP2) is equal or below 1.0 wt.-%, yet more preferably not more than 0.8 wt.-%, still more preferably not more than 0.5 wt.-%, like not more than 0.2 wt.-%.

As mentioned above the polypropylene matrix (M-PP2) is preferably a propylene homopolymer (H-PP2).

In case the polypropylene matrix (M-PP2) is a random propylene copolymer (R-PP2) it is appreciated that the random propylene copolymer (R-PP2) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP2) according to this invention comprises, especially consists of, monomers copolymerizable with propylene from the group consisting of ethylene, 1-butene and 1-hexene. More specifically the random propylene copolymer (R-PP2) of this invention comprises - apart from propylene - units derivable from ethylene and/or 1-butene. In a preferred embodiment the random propylene copolymer (R-PP2) comprises units derivable from ethylene and propylene only.

Additionally it is appreciated that the random propylene copolymer (R-PP2) has preferably a comonomer content in the range of more than 0.3 to 1.0 wt.-%, more preferably in the range of more than 0.3 to 0.8 wt.-%, yet more preferably in the range of 0.3 to 0.7 wt.-%.

The polypropylene matrix (M-PP2) of the heterophasic propylene copolymer (HECO-2), preferably the polypropylene matrix (M-PP2) being the propylene homopolymer (H-PP2), can be multimodal or bimodal in view of the molecular weight.

Further and preferably the polypropylene matrix (M-PP2) has a rather high melt flow rate.

Accordingly, it is preferred that in the present invention the polypropylene matrix (M-PP2), i.e. the xylene cold insoluble (XCI) fraction of the heterophasic propylene copolymer (HECO-2), has an $MFR_2$ (230 °C) in a range of 100.0 to 1,500.0 g/10 min, more preferably of 120.0 to 800.0 g/10 min, still more preferably of 150.0 to 500.0 g/10 min.

Preferably the polypropylene matrix (M-PP2) is isotactic. Accordingly it is appreciated that the polypropylene matrix (M-PP2) has a rather high isotactic pentad concentration, i.e. higher than 80 %, more preferably higher than 85 %, yet more preferably higher than 90 %, still more preferably higher than 92 %, still yet more preferably higher than 93 %, like higher than 95 %.

The second component of the heterophasic propylene copolymer (HECO-2) is the elastomeric propylene copolymer (E2).

The elastomeric propylene copolymer (E-PP2) comprises, preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric propylene copolymer (E-PP2) may additionally contain units derived from a conjugated diene, like butadiene, or a non-conjugated diene, however, it is preferred that the elastomeric copolymer consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric propylene copolymer (E-PP2) comprises at least units derivable from propylene and ethylene and may comprise other units derivable from a further $\alpha$-olefin as defined in the previous paragraph. However, it is in particular preferred that elastomeric propylene copolymer (E-PP2) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM2) and/or an ethylene propylene rubber (EPR2) as elastomeric copolymer (E-PP2)is especially preferred, the latter most preferred.

Like the polypropylene matrix (M-PP2) the elastomeric propylene copolymer (E-PP2) can be unimodal or multimodal, like bimodal. Concerning the definition of unimodal and multimodal, like bimodal, it is referred to the definition above.

In the present invention the content of units derivable from propylene in the elastomeric propylene copolymer (E-PP2) equates with the content of propylene detectable in the xylene cold soluble (XCS) fraction. Accordingly the propylene detectable in the xylene cold soluble (XCS) fraction ranges from 50.0 to 75.0 wt.-%, more preferably 55.0 to 70.0 wt.-%. Thus in a specific embodiment the elastomeric propylene copolymer (E-PP2), i.e. the xylene cold soluble (XCS) fraction, comprises from 25.0 to 50.0 wt.-%, more preferably 30.0 to 45.0 wt.-%, units derivable from ethylene and/or $C_4$ to $C_{12}$. Preferably the elastomeric propylene copolymer (E-PP2) is an ethylene propylene non-conjugated diene monomer polymer (EPDM2) or an ethylene propylene rubber (EPR2), the latter especially preferred, with a propylene and/or ethylene content as defined in this paragraph.

To achieve an especially good balance between stiffness and impact the intrinsic viscosity of the xylene cold soluble (XCS) fraction of the two heterophasic polypropylenes, if two heterophasic systems are present, shall preferably differ. Thus it is appreciated that the intrinsic viscosity (IV) measured according to ISO 1268-1 (decalin) of the xylene cold soluble (XCS) fraction of the heterophasic propylene copolymer (HECO-1) is higher compared to the intrinsic viscosity (IV) measured according to ISO 1268-1 (decalin) of the xylene cold soluble (XCS) fraction of the heterophasic propylene copolymer (HECO-2).

Accordingly it is preferred that the intrinsic viscosity (IV) of the xylene cold soluble (XCS) fraction of the heterophasic propylene copolymer (HECO-2) is rather low. Accordingly it is appreciated that the intrinsic viscosity of the xylene cold soluble (XCS) fraction of the heterophasic propylene copolymer (HECO-2) is below 3.5 dl/g, more preferably below 3.2 dl/g. Even more preferred the intrinsic viscosity of the xylene cold soluble (XCS) fraction of the heterophasic propylene copolymer (HECO-2) is in the range of 1.8 to 3.5 dl/g, preferably in the range 2.0 to below 3.2 dl/g.

One aspect of the present invention is that the final composition shall be featured by good flowability. Accordingly it is appreciated that the heterophasic propylene copolymer (HECO), such as the heterophasic propylene copolymer (HECO-1) is featured by a sufficiently high melt flow rate. However, especially good results are achievable in case the inventive composition comprises two different heterophasic propylene copolymers, i.e. the heterophasic propylene copolymer (HECO-1), and a high melt flow propylene copolymer heterophasic propylene copolymer (HECO-2), as defined above. It is in particular preferred that the two heterophasic propylene copolymers (HECO-1) and (HECO-2) differ in their melt flow rates. Accordingly in one specific aspect of the present invention the melt flow rate $MFR_2$ (230 °C) of the heterophasic propylene copolymer (HECO-2), is higher than the melt flow rate $MFR_2$ (230 °C) of the heterophasic propylene copolymer (HECO-1). More specifically it is appreciated that the melt flow rate $MFR_2$ (230 °C) of the high melt flow heterophasic propylene copolymer (HECO-2), is at least 5 g/10min, more preferably at least 10 g/10min, higher than the melt flow rate $MFR_2$ (230 °C) of the polypropylene (PP), i.e. heterophasic propylene copolymer (HECO-1).

Preferably the weight ratio between the first heterophasic propylene copolymer (HECO-1) and the second heterophasic propylene copolymer (HECO-2) [(HECO-1)/HECO-2)] is in the range of 3/1 to 1/2, more preferably in the range of 2/1 to 1/1.

Accordingly in one preferred embodiment of the present invention, the instant composition comprises

(a) 25 to 65 wt.-%, preferably 30 to 50 wt.-% of a first heterophasic propylene copolymer (HECO-1), preferably having a $MFR_2$ (230°C) of 3.0 to 120 g/10min, more preferably of 10 to 100 g/10min; and
(b) 1 to 35 wt.-%, preferably 10 to 25 wt.-% of a second heterophasic propylene copolymer (HECO-2), preferably having a $MFR_2$ (230°C) of at least 40 g/10min, more preferably of 40 to 1,000 g/10min, yet more preferably 60.0 to 500 g/10min,

based on the total weight of the composition.

In a further preferred embodiment, the one or more heterophasic propylene copolymers (HECO), e.g. the first heterophasic propylene copolymer (HECO-1) and the second heterophasic propylene copolymer (HECO-2) together, are contained in a total amount of 45 to 80 wt.-%, preferably 50 to 70 wt.-%.

The composition according to the present invention further comprises a high density polyethylene (HDPE) for improving the scratch resistance of the composition. As discussed above, the addition of HDPE typically results in a higher gloss, which is not desired. A high density polyethylene (HDPE) in the sense of the present invention has preferably a density measured according to ISO 1183-187 of at least 940 kg/m$^3$, more preferably of at least 950 kg/m$^3$, yet more preferably in the range of 940 to 975 kg/m$^3$, still yet more preferably in the range of 950 to 970 kg/m$^3$.

Preferably the high density polyethylene (HDPE) has a melt flow rate $MFR_2$ (190 °C) of 0.2 to 15 g/10min, more preferably of 0.3 to 10.0 g/10min.

The high density polyethylene (HDPE) is included in the composition of the present invention in an amount of at least 5 wt.-%, more preferably in a range of 5 to 15 wt.-%, based on the total weight of the composition. In a preferred embodiment, the high density polyethylene (HDPE) is included in an amount of 6 to 14 wt.-%, more preferably 8 to 12 wt.-%, still more preferably 9 to 11 wt.-%.

In a preferred embodiment, the composition of the present invention further comprises a plastomer (P). That is to say, (a) plastomer(s) (P) can be present in the inventive composition. The plastomer(s) (P) is/are (chemically) different to the elastomeric copolymers (E-PP1) and (E-PP2) of the heterophasic systems discussed above. More precisely the plastomer(s) (P) is/are preferably selected from the group consisting of a linear low density polyethylene (LLDPE), a styrenic block copolymer (SBC), and mixtures thereof. In one embodiment the inventive composition comprises as plastomers (P) a linear low density polyethylene (LLDPE), especially a linear low density polyethylene (LLDPE) as defined below.

The linear low density polyethylene (LLDPE), has preferably a density measured according to ISO 1183-187 in the range 820 to 900 kg/m$^3$, more preferably in the range of 850 to 900 kg/m$^3$, yet more preferably in the range of 840 to 880 kg/m$^3$, like in the range of 860 to 885 kg/m$^3$.

Preferably the linear low density polyethylene (LLDPE), is featured by a specific melt flow rate, namely by a melt flow rate $MFR_2$ (190 °C) measured according to ISO 1133 in the range of 0.3 to 30.0 g/10min, preferably in the range of 0.4 to 15.0 g/10min.

In a preferred embodiment the linear low density polyethylene (LLDPE), is a copolymer containing as a major part units derivable from ethylene. Accordingly it is appreciated that the linear low density polyethylene (LLDPE) comprises at least 50.0 wt.-% units derivable from ethylene, more preferably at least 55.0 wt.-% of units derived from ethylene. Thus it is appreciated that the linear low density polyethylene (LLDPE) comprises 50.0 to 70.0 wt.-%, more preferably 55.0 to 65 wt.-%, units derivable from ethylene. The comonomers present in the linear low density polyethylene (LLDPE), are $C_4$ to $C_{20}$ $\alpha$-olefins, like 1-butene, 1-hexene and 1-octene, the latter especially preferred. Accordingly in one specific embodiment the linear low density polyethylene (LLDPE) is an ethylene-1-octene copolymer with the amounts given in this paragraph.

In a preferred embodiment, the plastomer(s) (P) is/are included (in total) in the inventive composition in an amount of 1.0 to 10.0 wt.-%, more preferably 3.0 to 6.0 wt.-%.

One important requirement of the present invention is the presence of ant-blocking agents (AB). Anti-blocking agents (AB) used according to the present invention are known in the art for preventing or reducing the adhesion of two adjacent film layers by roughening their surfaces. In contrast to slip agents, that also improve slippage of films, anti-block agents are not miscible with the polymer to be mixed and normally remain solid during the manufacturing process. A further remarkable characteristic of anti-block agents is that they are randomly distributed in the polymer and do not migrate over the time from the interior to the surface of the polymer particles or articles made from the polymer.

In the present application, anti-blocking agents (AB) are, however, used for reducing the gloss of a polymer surface without substantially impairing the scratch resistance thereof. The anti-blocking agents (AB) suitable according to the present invention are typically inorganic anti-blocking agents (AB). Examples thereof include natural and synthetic silica (mined and manufactured silicon dioxide), cross-linked polymeric spheres, ceramic spheres (such as manufactured alumina-silicate ceramic), and zeolites. Preferred are different types of silica, including natural and synthetic silica. In a more preferred embodiment, the anti-blocking agent (AB) is selected from silica, especially synthetic silica. Such materials

are commercially available. Examples of suitable commercially available anti-blocking agents include Sylobloc K500, Gasil AB 725, which both are synthetic silicas, or Silton PS3LM (zeolite).

The anti-blocking agents (AB) used according to the present invention preferably are of particulate form having a spherical or an irregular shape, such as an angular, platy or otherwise irregular shape. Anti-blocking agents (AB) having an irregular shape are preferred according to the invention. The average particle size $d_{50}$ (Laser diffraction) of the anti-blocking particles typically ranges from 2 to 10 μm or more, such as 2 to 8 μm, preferably 4 to 6 μm.
According to one preferred embodiment the anti-blocking agent (AB) has a specific surface area of at least 100 $m^2/g$, more preferably of at least 180 $m^2/g$, like of at least 220 $m^2/g$.

The anti-blocking agent (AB) is contained in the composition of the present invention in an amount of 0.5 to 5.0 wt.-%, preferably 1.0 to 4.0 wt.-%, more preferably 1.5 to 2.5 wt.-%, based on the total weight of the composition. That is to say, the inorganic particulate material as defined above is considered an anti-blocking agent (AB) in the sense of the present invention when it is contained in the composition in an amount of equal or below 5.0 wt.-%. Thus different to the reinforcing mineral filler (F) (as defined below) the antiblocking agent (AB) according to this invention is contained in lower amounts than the reinforcing mineral filler (F), if present. Accordingly it is preferred that the amount of reinforcing mineral filler (F), if present, is at least 1.5 times, more preferably 2.0 times, higher than the amount [in weight percentage] of the anti-blocking agent (AB). In case that the anti-blocking agent (AB) and a reinforcing mineral filler (F) are simultaneously present, it is preferably understood that the anti-blocking agent (AB) and the mineral filler (F) are different, i.e. distinguishable, e.g. in view of their chemical nature. For instance in one embodiment the anti-blocking agent (AB) is a silica whereas the reinforcing mineral filler (F) is talc.

Accordingly, the composition of the present invention may further comprise a reinforcing mineral filler (F). Reinforcing mineral fillers a commonly used in the art in polymeric composition, e.g., in order to improve the impact resistance of the composition. The reinforcing mineral filler (F) suitable according to the invention limited to mineral fillers characterized by a significant particle anisotropy, i.e. being of platelet or needle shape. Preferably the reinforcing mineral filler (F) is phyllosilicate, mica or wollastonite. More preferably the reinforcing mineral filler (F) is selected from the group consisting of mica, wollastonite, smectite, montmorillonite and talc. Still more preferably the reinforcing mineral filler (F) is talc. A commercially available example of a suitable reinforcing mineral filler (F) is the talc Steamic T1CA.

If present the reinforcing mineral filler (F) is contained in an amount of more than 5.0 to 30.0 wt.-%, preferably of 10.0 to 20.0 wt.-%, based on the total weight of the composition of the present invention. More preferably, the filler (F) is present in an amount of 15 to 19 wt.-%.

The mineral filler (F) preferably has an average particle size $d_{50}$ (Sedimentation) [mass percent] of 0.8 to 5.0 μm, more preferably of 1.5 to 3.5 μm.

As stated above the instant polypropylene-based composition shall be especially featured by good flowability. Thus it is preferred that the polypropylene composition has an $MFR_2$ (230 °C) in a range of 5.0 to 40.0 g/10 min, preferably of 7.0 to 30.0 g/10 min, more preferably of 8.0 to 20.0 g/10 min.

The instant composition may further contain additional additives other than the anti-blocking agent (AB) and the optional reinforcing mineral filler (F). For instance it is appreciated that the composition comprises acid scavengers, antioxidants, nucleating agents, hindered amine light stabilizers, and pigments. Preferably the amount of additives in the composition shall not exceed 5 wt.-%, more preferably shall not exceed 3.5 wt.-%, like not more than 2.0 wt.-%, within the instant composition.

In the following preferred additional additives are listed.

A preferred acid scavenger (AS) is Ca-stearate.

As antioxidants (AO) preferably phenolic antioxidant and/or phosphorous antioxidant shall be present in the inventive composition.

More preferably the phenolic antioxidant is selected from the group consisting of
pentaerythrityl-tetrakis (3-(3,5-di-tert-butyl-4-hydroxyphenyl) propionate (CAS no. 6683-19-8; 1178 g/mol),
octadecyl 3-(3',5'-di-tert-butyl-4-hydroxyphenyl)propionate (CAS no. 2082-79-3; 531 g/mol)
bis(3,3-bis(3'-tert-butyl-4'-hydroxyphenyl)butanic acid) glycolester (CAS no. 32509-66-3; 794 g/mol),
3,3'-Bis(3,5-di-tert-butyl-4-hydroxyphenyl)-N,N'-hexamethylenedipropionamide (CAS no. 23128-74-7; 637 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; 741 g/mol),
1,6-hexanediyl-bis(3,5-bis(1,1dimethylethyl)-4-hydroxybenzene)propanoate) (CAS no. 35074-77-2; 639 g/mol),
triethylenglycol-bis-(3-tert-butyl-4-hydroxy-5-methylphenyl) propionate (CAS no. 36443-68-2; 587 g/mol),
a mixture of C13 to C15 linear and branched alkyl esters of 3-(3',5'-di-t-butyl-4'-hydroxyphenyl) propionic acid (CAS no. 171090-93-0; 485 g/mol), and
benzenepropanoic acid, 3,5-bis(1,1-dimehtyl-ethyl)-4-hydroxy-,C7-C9-branched and linear alkyl esters (CAS no. 125643-61-0; 399 g/mol),

The most preferred phenolic antioxidant is pentaerythrityl-tetrakis (3-(3,5-di-tert-butyl-4-hydroxyphenyl) propionate (CAS no. 6683-19-8; 1178 g/mol).

The preferred phosphorous antioxidant is selected from the group consisting of
tris-(2,4-di-tert-butylphenyl) phosphite (CAS no. 31570-04-4; 647 g/mol),
tetrakis-(2,4-di-tert-butylphenyl)-4,4'-biphenylen-di-phosphonite (CAS no. 38613-77-3; 991 g/mol),
bis-(2,4-di-tert-butylphenyl)-pentaerythrityl-di-phosphite (CAS no. 26741-53-7; 604 g/mol),
di-stearyl- pentaerythrityl-di-phosphite (CAS no. 3806-34-6; $M_w$ 733 g/mol),
tris-nonylphenyl phosphite (CAS no. 26523-78-4; 689 g/mol),
bis(2,6-di-tert-butyl-4-methylphenyl)pentaerythrityl-di-phosphite (CAS no. 80693-00-1; 633 g/mol),
2,2'-methylenebis (4,6-di-tert-butylphenyl) octyl-phosphite (CAS no. 126050-54-2; 583 g/mol),
1,1,3-tris (2-methyl-4-ditridecyl phosphite-5-tert-butylphenyl) butane (CAS no. 68958-97-4; 1831 g/mol),
4,4'-butylidenebis (3-methyl-6-tert-butylphenyl-di-tridecyl) phosphite (CAS no. 13003-12-8; 1240 g/mol),
bis-(2,4-dicumylphenyl)pentaerythritol diposphite (CAS no. 154862-43-8; 852 g/mol),
bis(2-methyl-4,6-bis(1,1-dmethylethyl) phenyl) phosphorous acid ethylester (CAS no. 145650-60-8; 514 g/mol),
2,2',2''-nitrilo triethyl-tris(3,3',5,5'-tetra-tert-butyl-1-1,1'-biphenyl-2,2'-diyl)phosphite) (CAS no. 80410-33-9; 1465 g/mol)
2,4,6-Tris(tert-butyl)phenyl-2-butyl-2-ethyl-1,3-propandiolphosphit (CAS no. 161717-32-4, 450 g/mol),
2,2'-Ethyliden-bis(4,6-di-tert-butylphenyl)fluorphosphonit (CAS no. 118337-09-0; 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; 660 g/mol),
tetrakis-(2,4-di-tert-butyl-5-methylphenyl)-4,4'-biphenylen-di-phosphite (CAS no. 147192-62-9; 1092 g/mol), and
1,3-bis-(diphenylphosphino)-2,2-dimethylpropane (CAS no. 80326-98-3; 440.5 g/mol).

The most preferred phosphorous antioxidant is tris-(2,4-di-tert-butylphenyl) phosphite (CAS no. 31570-04-4; 647 g/mol).

Hindered amine light stabilizers (HALS) are known in the art. Preferably such hindered amine light stabilizers are 2,6-alkyl-piperidine derivatives in particular 2,2,6,6-tetramethylpiperidine derivatives.

Accordingly the hindered amine light stabilizer is preferably selected from the group consisting of
bis-(2,2,6,6-tetramethyl-4-piperidyl) sebacate (CAS no. 52829-07-9; 481 g/mol), bis-(1,2,2,6,6-pentamethyl-4-piperidyl) sebacate (CAS no. 41556-26-7; 509 g/mol),
tetrakis (2,2,6,6-tetramethyl-4-piperidyl)-1,2,3,4-butane tetracarboxylate (CAS no. 64022-61-3; 792 g/mol),
tetrakis (1,2,2,6,6-pentamethyl-4-piperidyl)-1,2,3,4-butane tetracarboxylate (CAS no. 91788-83-9; 847 g/mol),
1,2,3-tris (1,2,2,6,6-pentamethyl-4-piperidyl)-4-tridecyl butane-1,2,3,4-tetracarboxylate (CAS no. 84696-72-0; 900 g/mol),
1,2,3-tris (2,2,6,6-tetramethyl-4-piperidyl)-4-tridecyl butane-1,2,3,4-tetracarboxylate (CAS no. 84696-71-9; 900 g/mol),
N,N'-bisformyl-N,N'-bis-(2,2,6,6-tetramethyl-4-piperidinyl)-hexamethylendiamine (CAS no. 124172-53-8; 450 g/mol),
1,3,5-triazine-2,4,6-triamine, $N_5$N'''-1,2-ethanediylbis[N-[3-[[4,6-bis[butyl(1,2,2,6,6-pentamethyl-4-piperidinyl)amino]-1,3,5-triazin-2-yl]amino]propyl]-N',N''-dibutyl-N',N''-bis(1,2,2,6,6-pentamethyl-4-piperidinyl)- (CAS no. 106990-43-6; 2286 g/mol), and
bis-(1-octyloxy-2,2,6,6-tetramethyl-4-piperidinyl) sebacate (CAS no. 129757-67-1; 737 g/mol).

In case a nucleating agent (NA) is used it is preferably an $\alpha$-nucleating agent. Even more preferred the present invention is free of $\beta$-nucleating agents. According to the present invention the nucleating agent (NA) is understood as a nucleating agent different to the mineral filler (F). Accordingly the nucleating agent (NA) is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

It is especially preferred that the nucleating agent (NA) is sodium 2,2'-methylene bis (4, 6,-di-tert-butylphenyl) phosphate.

Very good results are achievable in case the amount of the individual components is additionally considered. Accordingly it is preferred that the composition comprises

- the one or more heterophasic propylene copolymers (HECO) in a total amount of 50 to 70 wt.-%, preferably 55 to 65 wt.-%; and/or
- the high density polyethylene (HDPE) in an amount of 6 to 14 wt.-%, preferably 8 to 12 wt.-%; and/or
- the inorganic particulate anti-blocking agent (AB) in an amount of 1 to 4 wt.-%, preferably 1.5 to 2.5 wt.-%; and/or

- the reinforcing mineral filler (F) in an amount of 15.0 to 19.0 wt.-%; and/or
- the plastomer (P) in an amount of 1.0 to 4.0 wt.-%, preferably 1.5 to 2.5 wt.-% based on the total weight of the composition.

All components used for the preparation of the instant composition are known. Accordingly also their preparation is well known. For instance the heterophasic polypropylenes according to this invention are preferably produced in a multistage process known in the art, wherein the matrix is produced at least in one slurry reactor and subsequently the elastomeric copolymer is produced at least in one gas phase reactor.

Thus, the polymerization system can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably the process comprises also a prepolymerisation with the chosen catalyst system, as described in detail below, comprising the Ziegler-Natta procatalyst, the external donor and the cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerization stages. Also in such cases it is necessary to introduce so much cocatalyst into the prepolymerisation stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic polypropylenes of the invention comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315. They are incorporated herein by reference.

A further suitable slurry-gas phase process is the Spheripol® process of Basell.

Preferably the heterophasic polypropylene composition according to this invention are produced by using a special Ziegler-Natta procatalyst in combination with a special external donor, as described below in detail, preferably in the Spheripol® or in the Borstar®-PP process.

One preferred multistage process may therefore comprise the steps of:

- producing a polypropylene matrix in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,
- transferring the slurry reactor product into at least one first gas phase reactor, like one gas phase reactor or a first and a second gas phase reactor connected in series,
- producing an elastomeric copolymer in the presence of the polypropylene matrix and in the presence of the catalyst system in said at least first gas phase reactor,
- recovering the polymer product for further processing.

With respect to the above-mentioned preferred slurry-gas phase process, the following general information can be provided with respect to the process conditions.

Temperature is preferably from 40 to 110 °C, preferably between 50 and 100 °C, in particular between 60 and 90 °C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic polypropylenes are preferably obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

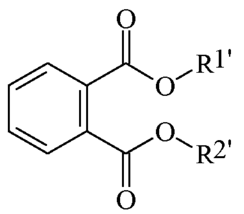

(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl,
  or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100 °C, preferably

between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

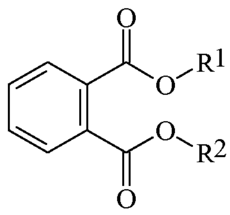

(II)

with $R^1$ and $R^2$ being methyl or ethyl, preferably ethyl, the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

In a further embodiment, the Ziegler-Natta procatalyst can be modified by polymerising a vinyl compound in the presence of the catalyst system, comprising the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic polypropylene composition according to this invention. The polymerized vinyl compound can act as an $\alpha$-nucleating agent. This modification is in particular used for the preparation of the heterophasic polypropylene (H-PP1).

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

For the production of the heterophasic polypropylenes according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (III)

$$Si(OCH_3)_2R_2^5 \qquad (III)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl,

tert.-butyl, tert.-amyl, neopentyl, cyclopentyl, cyclohexyl, methylcyclopentyl and cycloheptyl.

More preferably the external donor is either dicyclopentyl dimethoxy silane [$Si(OCH_3)_2$(cyclo-pentyl)$_2$] or diisopropyl dimethoxy silane [$Si(OCH_3)_2(CH(CH_3)_2)_2$]. For mixing the individual components of the instant composition, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive composition.

Accordingly a process for the preparation of the instant composition comprises the steps of adding the polymer components with, inter alia the at least heterophasic propylene copolymer (HECO), the high density polyethylene (HPDE), the inorganic particulate anti-blocking agent (AB), the optional mineral filler (F), the optional plastomer (P), and optionally other additives to an extruder (as mentioned above) and extruding the same obtaining thereby said composition.

The polypropylene-based composition according to the invention may be pelletized and compounded using any of the variety of compounding and blending methods well known and commonly used in the resin compounding art.

The current invention also provides (automotive) articles, like injection molded articles, comprising at least to 60 wt.-%, more preferably at least 80 wt.-%, yet more preferably at least 95 wt.-%, like consisting, of the inventive composition. Accordingly the present invention is especially directed to automotive articles, especially to car interiors and exteriors, like bumpers, side trims, step assists, body panels, spoilers, dashboards, interior trims and the like, comprising at least to 60 wt.-%, more preferably at least 80 wt.-%, yet more preferably at least 95 wt.-%, like consisting, of the inventive polypropylene composition.

The composition of the present invention is preferably used for the production of automotive articles, like moulded automotive articles, preferably automotive injection moulded articles. Even more preferred is the use for the production of car interiors and exteriors, like bumpers, side trims, step assists, body panels, spoilers, dashboards, interior trims, door claddings, centre consoles and the like.

The present invention is also directed to the use of an inorganic anti-blocking agent (AB) in a composition comprising one or more heterophasic propylene copolymers (HECO) and optionally a high density polyethylene (HDPE) to reduce the gloss of said composition. The gloss is reduced in a composition in case the composition has a gloss (at an angle of 60°) of below 2.9, more preferably of below 2.8, e.g. 1.5 to 2.8, yet more preferably below 2.7, e.g. 2.0 to 2.7. Preferably the amount of inorganic anti-blocking agent (AB) in the composition is 0.5 to equal below 5.0 wt.-%, more preferably 1.0 to 4.0 wt.-%, yet more preferably 1.5 to 2.5 wt.-%. Preferred embodiments of the composition and/or the anti-blocking agent (AB) can be taken from the information provided in the instant invention.

In another preferred embodiment, the invention is directed to the use of an inorganic anti-blocking agent (AB) in an automotive article to reduce the gloss of said automotive article, wherein said automotive article comprises a composition comprising one or more heterophasic propylene copolymers (HECO) and optionally a high density polyethylene (HDPE). Like mentioned above the gloss is reduced in an automotive article in case the automotive article has a gloss (at an angle of 60°) of below 2.9, more preferably of below 2.8, e.g. 1.5 to 2.8, yet more preferably below 2.7, e.g. 2.0 to 2.7. Preferably the amount of inorganic anti-blocking agent (AB) in the automotive article is 0.5 to equal below 5.0 wt.-%, more preferably 1.0 to 4.0 wt.-%, yet more preferably 1.5 to 2.5 wt.-%. Preferred embodiments of the automotive article, the composition and/or the anti-blocking agent (AB) can be taken from the information provided in the instant invention.

For instance it is preferred that the composition has a melt flow rate $MFR_2$ (230°C) measured according to ISO 1133 in the range of 5 to 40 g/10min, wherein further said composition comprises

(a) one or more heterophasic propylene copolymers (HECO), wherein the one or more heterophasic propylene copolymers (HECO) are contained in a total amount of at least 40.0 wt.-%, preferably in an total amount of 40.0 to 80.0 wt.-%;
(b) a high density polyethylene (HDPE) in an amount of at least 5.0 wt.-%, preferably in an amount of 5.0 to 15.0 wt.-%;
(c) an inorganic anti-blocking agent (AB) in an amount of 0.5 to 5.0 wt.-%;
(d) optionally the reinforcing mineral filler (F) in an amount of 15.0 to 19.0 wt.-%; and (e) optionally plastomer(s) (P) in an amount of at least 1.5 wt.-%, preferably in an amount of 1.5 to 5.0 wt.-%;

the weight percentages are based on the total weight of the composition.

Preferred automotive articles in which the anti-blocking agent is used are injection molded automotive articles. Preferably said automotive articles, like injection molded automotive articles, comprise at least to 60 wt.-%, more preferably at least 80 wt.-%, yet more preferably at least 95 wt.-%, like consisting, of the instant composition.

The present invention will now be described in further detail by the examples provided below.

## EXAMPLES

### 1. Measuring Methods

The following definitions of terms and determination methods apply for the above general description of the invention as well as to the below examples unless otherwise defined.

**NMR-spectroscopy measurements:**

The $^{13}C$-NMR spectra of polypropylenes were recorded on Bruker 400MHz spectrometer at 130 °C from samples dissolved in 1,2,4-trichlorobenzene/benzene-d6 (90/10 w/w). For the triad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the isotactic (mmmm) pentad concentration in a manner well known in the art.

The **Density** was measured according to ISO 1183-1 - method A (2004). Sample preparation is done by compression moulding in accordance with ISO 1872-2:2007.

**$MFR_2$ (230 °C)** was measured according to ISO 1133 (230 °C, 2.16 kg load).

**$MFR_2$ (190 °C)** was measured according to ISO 1133 (190 °C, 2.16 kg load). **Comonomer content in polypropylene was** determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of 250 $\mu$m and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Propylene-1-butene-copolymers were evaluated at 767 $cm^{-1}$. Quantitative results are obtained based upon reference to the film thickness.

**Comonomer content in polyethylene** was measured in a known manner based on Fourier transform infrared spectroscopy (FTIR) calibrated with $^{13}C$-NMR, using Nicolet Magna 550 IR spectrometer together with Nicolet Omnic FTIR software.

Films having a thickness of about 250 $\mu$m were compression molded from the samples. Similar films were made from calibration samples having a known content of the comonomer. The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$ Calibrations need to be done specifically for each base line type. Also, the comonomer content of the unknown sample needs to be within the range of the comonomer contents of the calibration samples.

The **content of xylene cold solubles (XCS, wt.-%)** is determined at 25 °C according ISO 16152; first edition; 2005-07-01.

**The intrinsic viscosity** was measured according to DIN ISO 1628/1, October 1999 (in decalin at 135 °C).

**Tensile Modulus** is measured according to ISO 527-2 (cross head speed = 50 mm/min; 23 °C) using injection molded specimens as described in EN ISO 1873-2 (dog bone shape, 4 mm thickness).

**Charpy notched impact** strength is determined according to ISO 179 / 1eA at -20 °C by using injection moulded test specimens as described in EN ISO 1873-2 (80 x 10 x 4 mm). To determine the **scratch resistance** a Cross Hatch Cutter Model 420P, manufactured by Erichsen, was used. For the tests, plaques of 70x70x4 mm size were cut from a moulded grained (grain parameters: average grain size = 1 mm, grain depth = 0.12 mm, conicity = 6°, also known as Grain VW K09) plaque of size 140x200x3 mm. The period between injection moulding of specimens and scratch-testing was 7 days.

For testing the specimens must be clamped in a suitable apparatus as described above. Scratches were applied at a force of 10 N using a cylindrical metal pen with a ball shaped end (radius = 0.5 mm $\pm$ 0.01). A cutting speed of 1000 mm/min was used.

A minimum of 20 scratches parallel to each other were brought up at a load of 10 N with a distance of 2 mm. The application of the scratches was repeated perpendicular to each other, so that the result was a scratching screen. The scratching direction should be unidirectional. The scratch resistance is reported as the difference of the luminance $\Delta L$ of the unscratched from the scratched areas. $\Delta L$ values were measured using a spectrophotometer that fulfils the requirements to DIN 5033. Light source for quantification of $\Delta L$ D65/10°. Measured $\Delta L$ values must be below a maximum of 1.5.

A detailed test description of the test method (Erichsen cross hatch cutter method) can be found in the article "Evaluation of scratch resistance in multiphase PP blends" by Thomas Koch and Doris Machl, published in POLYMER TESTING 26 (2007), p. 927-936.

The **gloss** was measured on injection moulded grained specimen according to DIN 67530 at an angle of 60°. The grain for gloss measurements was identical to the grain used in evaluation of scratch resistance.
**Average particle size d50 (Laser diffraction)** is calculated from the particle size distribution [mass percent] as determined by laser diffraction (Mastersizer) according to ISO 13320-1.
**Average particle size d50 (Sedimentation)** is calculated from the particle size distribution [mass percent] as determined by gravitational liquid sedimentation according to ISO 13317-3

(Sedigraph)

## 2. Examples

Two polymer compositions according to the present invention (IE: inventive examples) and two comparative compositions (CE: comparative examples) were prepared. The components of the compositions are listed in Table 1 and 2 below. The polymer compositions were prepared in a conventional manner by melt blending the components.

**Table 1:** The heterophasic polypropylenes (HECO) used

| | | HECO 1 | HECO 2 |
|---|---|---|---|
| MFR total | [g/10min] | 18 | 100.0 |
| MFR of XCI | [g/10min] | 85 | 350 |
| XCS | [wt%] | 29 | 22 |
| C2 total | [wt%] | 20.0 | 9.5 |
| C2 in XCS | [wt%] | 52 | 39 |
| IV of XCS | [dl/g] | 2.4 | 2.9 |
| "HECO 1" is the commercial product EF015AE of Borealis<br>"HECO 2" is the commercial product BJ998MO of Borealis | | | |

**Table 2:** Compositions

| Example* | | CE1 | IE1 | CE2 | IE1 |
|---|---|---|---|---|---|
| HECO 1 | [wit%] | 46.2 | 44.7 | 46.2 | 44.7 |
| HECO 2 | [wit%] | 15.0 | 15.0 | 15.0 | 15.0 |
| HDPE 1 | [wt%] | 10.0 | 10.0 | - | - |
| HDPE 2 | [wt%] | - | - | 10.0 | 10.0 |
| Plastomer | [wt%] | 3.0 | 3.0 | 3.0 | 3.0 |
| Filler | [wt%] | 17.0 | 17.0 | 17.0 | 17.0 |
| Antiblocking agent | [wt%] | - | 2.00 | - | 2.00 |
| $MFR_2$ | [g/10min] | 15.5 | 13.8 | 11.8 | 10.0 |
| Tensile Modulus | [MPa] | 1528 | 1468 | 1513 | 1494 |
| Impact strength (-20°C) | [kJ/m$^2$] | 4.1 | 3.9 | 4.5 | 4.3 |
| Scratch resistance 10N | ΔL | 0.5 | 0.7 | 0.2 | 0.5 |
| Gloss (60°) | [%] | 3.2 | 2.9 | 2.8 | 2.6 |
| * Rest to 100 wt.-% are additives, like antioxidants and pigments (e.g. Carbon black) | | | | | |

**HDPE 1** is the commercial product MG9641 of Borealis AG having a $MFR_2$ (190°C) of 8 g/10min and a density of 964 kg/m$^3$,

**HDPE 2** is the commercial product BS 2581 of Borealis AG having a $MFR_2$ (190°C) of 0.3 g/10min and a density of 958 kg/m$^3$,

**Plastomer** is the commercial product Engage 8200 of Dow Elastomers which is an ethylene-octene copolymer having a $MFR_2$ (190°C) of 5.0 g/lOmin a density of 870 kg/$m^3$, and 1-octene content as determined by FTIR calibrated with $^{13}$C-NMR of 38 wt%.

**Filler** is the commercial talc Steamic T1 CA of Luzenac having a mean particle size $d_{50}$ of 2.1 μm (Sedigraph) and a specific surface (BET) of 8.0 $m^2$/g.

**Antiblocking agent** is synthetic amorphous silica known under the tradename Sylobloc K500 having a specific surface area of 269 m2/g, a pore volume of 1.68, an average pore diameter of 21.7 nm and an average particle diameter $d_{50}$ of 5.0 μm.

## Claims

**1.** A composition having a melt flow rate $MFR_2$ (230°C) measured according to ISO 1133 in the range of 5 to 40 g/10min, said composition comprising

(a) one or more heterophasic propylene copolymers (HECO), wherein the one or more heterophasic propylene copolymers (HECO) are contained in a total amount of at least 40 wt.-%;
(b) a high density polyethylene (HDPE) in an amount of at least 5.0 wt.-%;
(c) an inorganic antiblocking agent (AB) in an amount of 0.5 to 5.0 wt.-%;
(d) optionally a reinforcing mineral filler (F) in an amount of more than 5.0 to 30.0 wt.-%;

based on the total weight of the composition,
wherein further the inorganic antiblocking agent (AB) and the reinforcing mineral filler (F) are chemically different and the inorganic antiblocking agent (AB) is selected from natural and synthetic silica, alumina-silicate ceramic spheres, cross-linked polymeric spheres, and zeolites.

**2.** Composition according to claim 1,

(a) the one or more heterophasic propylene copolymers (HECO) are contained in a total amount of 50 to 70 wt.-%, preferably 55 to 65 wt.-%; and/or
(b) the high density polyethylene (HDPE) is contained in an amount of 6 to 14 wt.-%, preferably 8 to 12 wt.-%; and/or
(c) the inorganic particulate antiblocking agent (AB) is contained in an amount of 1 to 4 wt.-%, preferably 1.5 to 2.5 wt.-%

based on the total amount of the composition.

**3.** Composition according to claim 1 or 2, wherein the composition comprises a first heterophasic propylene copolymer (HECO-1) and a second heterophasic propylene copolymer, wherein further the weight ratio between the first heterophasic propylene copolymer (HECO-1) and the second heterophasic propylene copolymer (HECO-2) [(HECO-1)/HECO-2)] is in the range of 3/1 to 1/2, more preferably in the range of 2/1 to 1/1.

**4.** Composition according to claim 3, wherein the first heterophasic propylene copolymer (HECO-1) has

(a) a melt flow rate $MFR_2$ (230°C) measured according to ISO 1133 in the range of 3 to 120 g/10min, and/or
(b) a xylene cold soluble fraction (XCS) in the range of 20.0 to 50.0 wt.-%, and/or
(c) a total propylene content 70.0 to 92.0 wt.-%, and/or
(d) a propylene content in the xylene cold soluble (XCS) fraction of 40.0 to 75.0 wt.-%.

**5.** Composition according to claim 3 or 4, wherein the second heterophasic propylene copolymer (HECO-2) has

(a) a melt flow rate $MFR_2$ (230 °C) measured according to ISO 1133 in the range of 40 to 1,000 g/10min, and/or
(b) a xylene cold soluble fraction (XCS) in the range of 8.0 to 30.0 wt.-%, and/or
(c) a total propylene content 85.0 to 96.0 wt.-%, and/or
(d) a propylene content in the xylene cold soluble (XCS) fraction of 50.0 to 75.0 wt.-%.

**6.** The composition according to any one of claims 1 to 5, wherein the inorganic antiblocking agent (AB) is selected from silica, especially is synthetic silica.

**7.** The composition according to any one of claims 1 to 6, wherein the inorganic antiblocking agent (AB) has

(a) average particle size $d_{50}$ of 2 to 10 μm or more; and/or
(b) a specific surface area of at least 100 $m^2/g$.

**8.** The composition according to any one of claims 1 to 7, further comprising a plastomer (P) in an amount of 1.0 to 10.0 wt.-%.

**9.** The composition according to claim 8, wherein the mineral filler (F)

(a) is preferably selected from a phyllosilicate, mica or wollastonite, more preferably is selected from the group consisting of mica, wollastonite, kaolinite, smectite, montmorillonite and talc, still more preferably is talc; and/or
(b) has an average particle size $d_{50}$ of 0.8 to 5.0 μm, more preferably of 1.5 to 3 μm.

**10.** The composition according to claim 8 or 9, wherein the plastomer (P) is a linear low density polyethylene (LLDPE) having a density in the range 820 to 900 $kg/m^3$.

**11.** The composition according to any one of claims 1 to 10, wherein the high density polyethylene (HDPE) has

(a) a density of at least 940 $kg/m^3$; and/or
(b) a melt flow rate $MFR_2$ (190 °C) of 0.2 to 15 g/10min.

**12.** Automotive article comprising a composition according to any one of the preceding claims 1 to 11.

**13.** Use of the composition according to any one of the preceding claims 1 to 11 for automotive articles.

**14.** Use of an inorganic anti-blocking agent (AB) in a composition comprising one or more heterophasic propylene copolymers (HECO) and optionally a high density polyethylene (HDPE) to reduce the gloss of said composition, wherein the gloss (at an angle of 60°) of the composition is below 2.9.

**15.** Use of an inorganic anti-blocking agent (AB) in an automotive article comprising a composition comprising one or more heterophasic propylene copolymers (HECO) and optionally a high density polyethylene (HDPE) to reduce the gloss of said automotive article, wherein the gloss (at an angle of 60°) of the automotive article is below 2.9.

**16.** Use according to claim 14 or 15, wherein the composition is a composition according to one of the claims 1 to 11.

## Patentansprüche

**1.** Zusammensetzung mit einer Schmelze-Fließ-Rate $MFR_2$ (230°C), gemessen gemäß ISO 1133, in dem Bereich von 5 bis 40 g/10 min, wobei die Zusammensetzung umfasst

(a) ein oder mehrere heterophasische Propylen-Copolymere (HECO), wobei die einen oder mehreren heterophasischen Propylen-Copolymere (HECO) in einer Gesamtmenge von mindestens 40 Gew.-% enthalten sind;
(b) ein Polyethylen mit hoher Dichte (HDPE) in einer Menge von mindestens 5,0 Gew.-%;
(c) ein anorganisches Antiblockierungs-Mittel (AB) in einer Menge von 0,5 bis 5,0 Gew.-%;
(d) gegebenenfalls einen verstärkenden Mineral-Füllstoff (F) in einer Menge von mehr als 5,0 bis 30,0 Gew.-%;

basierend auf dem Gesamt-Gewicht der Zusammensetzung, wobei weiterhin das anorganische Antiblockierungs-Mittel (AB) und der verstärkende Mineral-Füllstoff (F) chemisch verschieden sind und das anorganische Antiblockierungs-Mittel (AB) aus natürlichem und synthetischem Siliziumdioxid, Aluminiumoxid-Silikat-Keramik-Kugeln, vernetzten Polymer-Kugeln und Zeolithen ausgewählt ist.

**2.** Zusammensetzung nach Anspruch 1,

(a) das eine oder die mehreren heterophasischen Propylen-Copolymere (HECO) in einer Gesamtmenge von 50 bis 70 Gew.-%, vorzugsweise 55 bis 65 Gew.-%, enthalten sind; und/oder
(b) das Polyethylen mit hoher Dichte (HDPE) in einer Menge von 6 bis 14 Gew.-%, vorzugsweise 8 bis 12 Gew.-

%, enthalten ist; und/oder
(c) das anorganische teilchenförmige Antiblockierungs-Mittel (AB) in einer Menge von 1 bis 4 Gew.-%, vorzugsweise 1,5 bis 2,5 Gew.-%, enthalten ist, basierend auf der Gesamt-Menge der Zusammensetzung.

**3.** Zusammensetzung nach Anspruch 1 oder 2, wobei die Zusammensetzung ein erstes heterophasisches Propylen-Copolymer (HECO-1) und ein zweites heterophasisches Propylen-Copolymer umfasst, wobei weiterhin das Gewichts-Verhältnis zwischen dem ersten heterophasischen Propylen-Copolymer (HECO-1) und dem zweiten heterophasischen Propylen-Copolymer (HECO-2) [(HECO-1)/HECO-2)] in dem Bereich von 3/1 bis 1/2, bevorzugter in dem Bereich von 2/1 bis 1/1, liegt.

**4.** Zusammensetzung nach Anspruch 3, wobei das erste heterophasische Propylen-Copolymer (HECO-1) aufweist

(a) eine Schmelze-Fließ-Rate $MFR_2$ (230°C), gemessen gemäß ISO 1133, in dem Bereich von 3 bis 120 g/10 min, und/oder
(b) eine in kaltem Xylol lösliche Fraktion (XCS) in dem Bereich von 20,0 bis 50,0 Gew.-%, und/oder
(c) einen Gesamt-Propylen-Gehalt 70,0 0 bis 92,0 Gew.-%, und/oder
(d) einen Propylen-Gehalt in der in kaltem Xylol löslichen Fraktion (XCS) von 40,0 bis 75,0 Gew.-%.

**5.** Zusammensetzung nach Anspruch 3 oder 4, wobei das zweite heterophasische Propylen-Copolymer (HECO-2) aufweist

(a) eine Schmelze-Fließ-Rate $MFR_2$ (230°C), gemessen gemäß ISO 1133, in dem Bereich von 40 bis 1 000 g/10 min, und/oder
(b) eine in kaltem Xylol lösliche Fraktion (XCS) in dem Bereich von 8,0 bis 30,0 Gew.-%, und/oder
(c) einen Gesamt-Propylen-Gehalt von 85,0 bis 96,0 Gew.-%, und/oder
(d) einen Propylen-Gehalt in der in kaltem Xylol löslichen Fraktion (XCS) von 50,0 bis 75,0 Gew.-%.

**6.** Zusammensetzung nach einem der Ansprüche 1 bis 5, wobei das anorganische Antiblockierungs-Mittel (AB) aus Siliziumdioxid ausgewählt ist, insbesondere synthetisches Siliziumdioxid ist.

**7.** Zusammensetzung nach einem der Ansprüche 1 bis 6, wobei das anorganische Antiblockierungs-Mittel (AB) aufweist

(a) eine mittlere Teilchen-Größe $d_{50}$ von 2 bis 10 $\mu$m oder mehr; und/oder
(b) eine spezifische Oberfläche von mindestens 100 $m^2$/g.

**8.** Zusammensetzung nach einem der Ansprüche 1 bis 7, weiterhin umfassend ein Plastomer (P) in einer Menge von 1,0 bis 10,0 Ges.-%.

**9.** Zusammensetzung nach Anspruch 8, wobei der Mineral-Füllstoff (F)

(a) vorzugsweise aus einem Phyllosilikat, Glimmer oder Wollastonit ausgewählt ist, bevorzugter aus der Gruppe, bestehend aus Glimmer, Wollastonit, Kaolinit, Smectit, Montmorillonit und Talkum, ausgewählt ist, stärker bevorzugt Talkum ist; und/oder
(b) eine mittlere Teilchen-Größe $d_{50}$ von 0,8 bis 5, 0 $\mu$m, bevorzugter von 1,5 bis 3 $\mu$m, aufweist.

**10.** Zusammensetzung nach Anspruch 8 oder 9, wobei das Plastomer (P) ein lineares Polyethylen mit niederer Dichte (LLDPE) mit einer Dichte in dem Bereich 820 bis 900 kg/$m^3$ ist.

**11.** Zusammensetzung nach einem der Ansprüche 1 bis 10, wobei das Polyethylen mit hoher Dichte (HDPE) aufweist

(a) eine Dichte von mindestens 940 kg/$m^3$; und/oder
(b) eine Schmelze-Fließ-Rate $MFR_2$ (190°C) von 0,2 bis 15 g/10 min.

**12.** Kraftfahrzeug-Gegenstand, umfassend eine Zusammensetzung nach einem der vorangehenden Ansprüche 1 bis 11.

**13.** Verwendung der Zusammensetzung nach einem der vorangehenden Ansprüche 1 bis 11 für Kraftfahrzeug-Gegenstände.

**14.** Verwendung von einem anorganischen Antiblockierungs-Mittel (AB) in einer Zusammensetzung, umfassend ein oder mehrere heterophasische Propylen-Copolymere (HECO) und gegebenenfalls ein Polyethylen mit hoher Dichte (HDPE), um den Glanz der Zusammensetzung zu vermindern, wobei der Glanz (bei einem Winkel von 60°) der Zusammensetzung unter 2,9 ist.

**15.** Verwendung eines anorganischen Antiblockierungs-Mittels (AB) in einem Kraftfahrzeug-Gegenstand, umfassend eine Zusammensetzung, die ein oder mehrere heterophasische Propylen-Copolymere (HECO) und gegebenenfalls ein Polyethylen mit hoher Dichte (HDPE) umfasst, um den Glanz des Kraftfahrzeug-Gegenstands zu vermindern, wobei der Glanz (bei einem Winkel von 60°) des Kraftfahrzeug-Gegenstands unter 2,9 ist.

**16.** Verwendung nach Anspruch 14 oder 15, wobei die Zusammensetzung eine Zusammensetzung nach einem der Ansprüche 1 bis 11 ist.

## Revendications

**1.** Composition présentant un indice de fluage $MFR_2$ (230°C), mesuré conformément à la norme ISO 1133, situé dans la plage allant de 5 à 40 g/10 min, ladite composition comprenant

(a) un ou plusieurs copolymère(s) de propylène hétérophasique(s) (HECO), le ou les copolymère(s) de propylène hétérophasique(s) (HECO) étant contenu(s) en une quantité totale d'au moins 40 % en poids ;
(b) un polyéthylène haute densité (HDPE) en une quantité d'au moins 5,0 % en poids ;
(c) un agent antiblocage inorganique (AB) en une quantité de 0,5 à 5,0 % en poids ;
(d) éventuellement une charge minérale de renforcement (F) en une quantité de plus de 5,0 à 30,0 % en poids ;

par rapport au poids total de la composition,
dans laquelle en outre l'agent antiblocage inorganique (AB) et la charge minérale de renforcement (F) sont chimiquement différents et l'agent antiblocage inorganique (AB) est choisi parmi les silices naturelles et synthétiques, les sphères céramiques d'aluminosilicate, les sphères polymères réticulées, et les zéolites.

**2.** Composition selon la revendication 1, dans laquelle

(a) le ou les copolymère(s) de propylène hétérophasique(s) (HECO) est/sont contenu(s) en une quantité totale de 50 à 70 % en poids, de préférence de 55 à 65 % en poids ; et/ou
(b) le polyéthylène haute densité (HDPE) est contenu en une quantité de 6 à 14 % en poids, de préférence de 8 à 12 % en poids ; et/ou
(c) l'agent antiblocage particulaire inorganique (AB) est contenu en une quantité de 1 à 4 % en poids, de préférence de 1,5 à 2,5 % en poids par rapport à la quantité totale de la composition.

**3.** Composition selon la revendication 1 ou 2, laquelle composition comprend un premier copolymère de propylène hétérophasique (HECO-1) et un deuxième copolymère de propylène hétérophasique, dans laquelle en outre le rapport en poids entre le premier copolymère de propylène hétérophasique (HECO-1) et le deuxième copolymère de propylène hétérophasique (HECO-2) [(HECO-1)/ (HECO-2)] est situé dans la plage allant de 3/1 à 1/2, plus préférablement dans la plage allant de 2/1 à 1/1.

**4.** Composition selon la revendication 3, dans laquelle le premier copolymère de propylène hétérophasique (HECO-1) présente

(a) un indice de fluage $MFR_2$ (230°C), mesuré conformément à la norme ISO 1133, situé dans la plage allant de 3 à 120 g/10 min, et/ou
(b) une fraction soluble dans le xylène froid (XCS) située dans la plage allant de 20,0 à 50,0 % en poids, et/ou
(c) une teneur totale en propylène de 70,0 à 92,0 % en poids, et/ou
(d) une teneur en propylène de la fraction soluble dans le xylène froid (XCS) de 40,0 à 75,0 % en poids.

**5.** Composition selon la revendication 3 ou 4, dans laquelle le deuxième copolymère de propylène hétérophasique (HECO-2) présente

(a) un indice de fluage $MFR_2$ (230°C), mesuré conformément à la norme ISO 1133, situé dans la plage allant

de 40 à 1000 g/10 min, et/ou
(b) une fraction soluble dans le xylène froid (XCS) située dans la plage allant de 8,0 à 30,0 % en poids, et/ou
(c) une teneur totale en propylène de 85,0 à 96,0 % en poids, et/ou
(d) une teneur en propylène de la fraction soluble dans le xylène froid (XCS) de 50,0 à 75,0 % en poids.

**6.** Composition selon l'une quelconque des revendications 1 à 5, dans laquelle l'agent antiblocage inorganique (AB) est choisi parmi les silices, en particulier est une silice synthétique.

**7.** Composition selon l'une quelconque des revendications 1 à 6, dans laquelle l'agent antiblocage inorganique (AB) présente

(a) une granulométrie moyenne $d_{50}$ de 2 à 10 $\mu$m ou plus ; et/ou
(b) une surface spécifique d'au moins 100 $m^2$/g.

**8.** Composition selon l'une quelconque des revendications 1 à 7, comprenant en outre un plastomère (P) en une quantité de 1,0 à 10,0 % en poids.

**9.** Composition selon la revendication 8, dans laquelle la charge minérale (F)

(a) est de préférence choisie parmi un phyllosilicate, le mica et la wollastonite, plus préférablement est choisie dans l'ensemble constitué par le mica, la wollastonite, la kaolinite, la smectite, la montmorillonite et le talc, encore plus préférablement est le talc ; et/ou
(b) présente une granulométrie moyenne $d_{50}$ de 0,8 à 5,0 $\mu$m, plus préférablement de 1,5 à 3 $\mu$m.

**10.** Composition selon la revendication 8 ou 9, dans laquelle le plastomère (P) est un polyéthylène basse densité linéaire (LLDPE) présentant une masse volumique située dans la plage allant de 820 à 900 kg/$m^3$.

**11.** Composition selon l'une quelconque des revendications 1 à 10, dans laquelle le polyéthylène haute densité (HDPE) présente

(a) une masse volumique d'au moins 940 kg/$m^3$ ; et/ou
(b) un indice de fluage $MFR_2$ (190°C) de 0,2 à 15 g/10 min.

**12.** Article d'automobile comprenant une composition selon l'une quelconque des revendications 1 à 11.

**13.** Utilisation de la composition selon l'une quelconque des revendications 1 à 11 pour des articles d'automobile.

**14.** Utilisation d'un agent antiblocage inorganique (AB) dans une composition comprenant un ou plusieurs copolymère(s) de propylène hétérophasique(s) (HECO) et éventuellement un polyéthylène haute densité (HDPE) pour réduire le brillant de ladite composition, dans laquelle le brillant (à un angle de 60°) de la composition est inférieur à 2,9.

**15.** Utilisation d'un agent antiblocage inorganique (AB) dans un article d'automobile comprenant une composition comprenant un ou plusieurs copolymère(s) de propylène hétérophasique(s) (HECO) et éventuellement un polyéthylène haute densité (HDPE) pour réduire le brillant dudit article automobile, dans laquelle le brillant (à un angle de 60°) de la composition est inférieur à 2,9.

**16.** Utilisation selon la revendication 14 ou 15, dans laquelle la composition est une composition selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4526926 A
- US 5354796 A
- EP 0618259 A
- US 6048942 A
- EP 1040162 A
- US 20050267261 A
- EP 2197947 A
- US 5750234 A
- EP 0887379 A1
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A


### Non-patent literature cited in the description


- **GACHTER ; MÜLLER.** Plastics Additives Handbook. Hanser Publishers, 1990
- *CHEMICAL ABSTRACTS,* 6683-19-8
- *CHEMICAL ABSTRACTS,* 2082-79-3
- *CHEMICAL ABSTRACTS,* 32509-66-3
- *CHEMICAL ABSTRACTS,* 23128-74-7
- *CHEMICAL ABSTRACTS,* 90498-90-1
- *CHEMICAL ABSTRACTS,* 35074-77-2
- *CHEMICAL ABSTRACTS,* 36443-68-2
- *CHEMICAL ABSTRACTS,* 171090-93-0
- *CHEMICAL ABSTRACTS,* 125643-61-0
- *CHEMICAL ABSTRACTS,* 31570-04-4
- *CHEMICAL ABSTRACTS,* 38613-77-3
- *CHEMICAL ABSTRACTS,* 26741-53-7
- *CHEMICAL ABSTRACTS,* 3806-34-6
- *CHEMICAL ABSTRACTS,* 26523-78-4
- *CHEMICAL ABSTRACTS,* 80693-00-1
- *CHEMICAL ABSTRACTS,* 126050-54-2
- *CHEMICAL ABSTRACTS,* 68958-97-4
- *CHEMICAL ABSTRACTS,* 13003-12-8
- *CHEMICAL ABSTRACTS,* 154862-43-8
- *CHEMICAL ABSTRACTS,* 145650-60-8
- *CHEMICAL ABSTRACTS,* 80410-33-9
- *CHEMICAL ABSTRACTS,* 161717-32-4
- *CHEMICAL ABSTRACTS,* 118337-09-0
- *CHEMICAL ABSTRACTS,* 203255-81-6
- *CHEMICAL ABSTRACTS,* 147192-62-9
- *CHEMICAL ABSTRACTS,* 80326-98-3
- *CHEMICAL ABSTRACTS,* 52829-07-9
- *CHEMICAL ABSTRACTS,* 41556-26-7
- *CHEMICAL ABSTRACTS,* 64022-61-3
- *CHEMICAL ABSTRACTS,* 91788-83-9
- *CHEMICAL ABSTRACTS,* 84696-72-0
- *CHEMICAL ABSTRACTS,* 84696-71-9
- *CHEMICAL ABSTRACTS,* 124172-53-8
- *CHEMICAL ABSTRACTS,* 106990-43-6
- *CHEMICAL ABSTRACTS,* 129757-67-1
- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **THOMAS KOCH ; DORIS MACHL.** Evaluation of scratch resistance in multiphase PP blends. *POLYMER TESTING,* 2007, vol. 26, 927-936